# EUROPEAN PATENT APPLICATION

(11) **EP 1 796 093 A1**
(43) Date of publication of application: **13.06.2007**
(21) Application number: 05788395.1
(22) Date of filing: 27.09.2005
(51) Int. Cl.: G11B 23/03, G11B 23/28

(54) **DISC CARTRIDGE**

(30) Priority: 28.09.2004 JP 2004281832; 21.10.2004 JP 2004306655
(71) Applicant: MATSUSHITA ELECTRIC INDUSTRIAL CO., LTD., Osaka 571-8501 (JP)
(72) Inventor: KONDOU, Hiroya Matsushita Electr.Industr.Co.Ltd., Chuo-ku, Osaka 540-6319 (JP); AKAHIRA, Nobuo Matsushita Electr.Industr.Co.Ltd., Chuo-ku, Osaka 540-6319 (JP)
(74) Representative: Grünecker, Kinkeldey, Stockmair & Schwanhäusser Anwaltssozietät
(86) International application number: PCT/JP2005/017740
(87) International publication number: WO 2006/035768

(57) **Abstract**

A disk cartridge includes a cartridge body and a lid. The cartridge body includes: first and second principal surfaces opposed to each other; a storage space to store a disklike data storage medium; windows cut through the first and second principal surfaces to partially expose the data storage medium in the storage space; an opening for removing the data storage medium from the storage space; and write-protect indicator holes cut through the first and second principal surfaces to prohibit writing on the data storage medium stored. The lid is provided to cover and uncover the opening of the cartridge body. The cartridge body is shaped such that both of the first and second principal surfaces can be opposed to a pickup of an optical disk drive when the cartridge is loaded into the drive. Of the two write-protect indicator holes of the first and second principal surfaces, only the hole of the second principal surface is provided with a write enable/disable selecting mechanism that covers or uncovers the write-protect indicator hole.

## Description

### TECHNICAL FIELD

The present invention relates to a disk cartridge to store a disklike data storage medium.

### BACKGROUND ART

Disklike data storage media for optically reading and writing data (which will be referred to herein as "optical disks") are used extensively nowadays as media to store a huge amount of digital data. The optical disks are classifiable into read-only ones and recordable ones. The recordable optical disks are further grouped into optical disks on which data can be written only once (and which are called "write-once disks") and rewritable optical disks on which data can be written a number of times. In the following description, a rewritable optical disk will be taken as an exemplary recordable optical disk.

In rewriting data on a rewritable optical disk, if the surface of the data (recordable) side of the optical disk is soiled with dust or finger marks, the data may not be written properly there. For that reason, rewritable optical disks are often stored in a disk cartridge so as to prevent the surface of the data side from being soiled with dust or finger marks.

Meanwhile, as read-only optical disks are not stored in a cartridge, an optical disk drive dedicated to read-only optical disks cannot play any rewritable optical disk that is stored in a cartridge. That is why there is a growing demand for getting a rewritable optical disk played by such an optical disk drive dedicated to read-only optical disks. To meet such a demand, disk cartridges, from which the disk is removable, have been proposed.

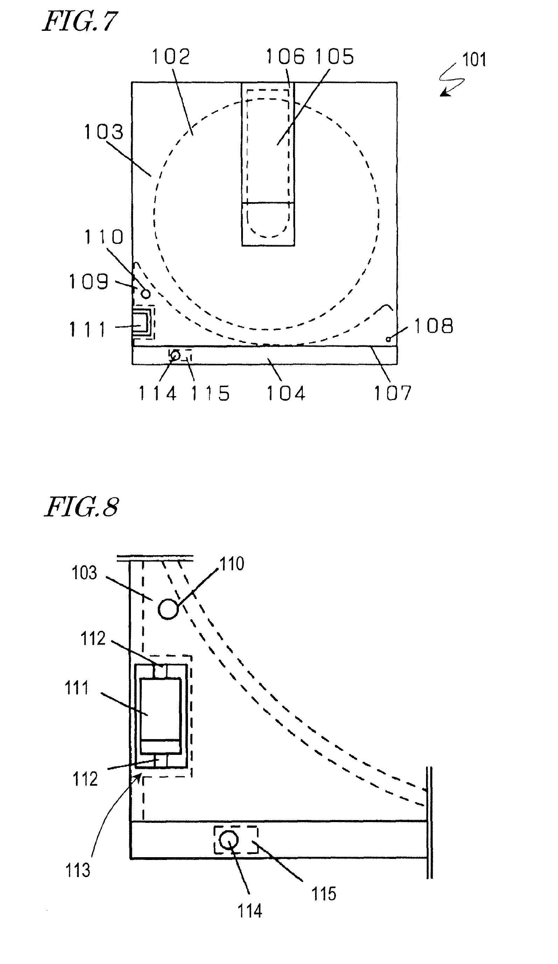

Patent Document No. 1 discloses a conventional disk cartridge from which a disk is removable. As shown in FIG. **7,** the conventional disk cartridge **101** includes a cartridge body **103,** a lid **104,** and a shutter **106.**

The cartridge body **103** has a thin hexahedron shape with a space for storing a rewritable optical disk **102.** The two opposed principal surfaces of the hexahedron cartridge body **103** have windows **105** that partially expose the optical disk **102.** The shutter **106** moves parallel to the two principal surfaces so as to open or close the windows **105.** When the cartridge **101** is loaded into an optical disk drive, an opener provided for the optical disk drive gets interlocked with the shutter **105.** And as the cartridge **101** goes deeper into the drive, the shutter **106** moves so as to open the windows **105.**

The cartridge body **103** has an opening **107** to remove the disk **102.** The opening **107** is one of the six sides of the hexahedron. The lid **104** is attached to the cartridge body **103** at one end thereof so as to be rotatable on a shaft **108,** which is arranged near the opening **107** of the cartridge body **103.**

An engaging portion **109** is provided at the other end of the lid **104.** When the engaging portion **109** gets engaged with the engaging portion **110** of the cartridge body **103,** the opening **107** can be kept covered with the lid **104.**

A tab portion **111** is provided for the cartridge body **103** near the engaging portion **109.** FIG. **8** illustrates the tab portion **111** of the cartridge body **103** on a larger scale. The tab portion **111** is connected to the cartridge body 103 at multiple points with connecting portions **112** and is fitted into a groove portion **113** of the lid **104.** That is why when used normally, the lid **104** cannot be rotated unless the tab portion **111** is disconnected from the cartridge body **103** by cutting off the connecting portions **112.** That is to say, the optical disk **102** cannot be removed unless the tab portion **111** is cut off.

The lid **104** also has a write-protect indicator hole **114** and a movable member **115** that can open and close the write-protect indicator hole **114.** The optical disk drive to be loaded with the disk cartridge **101** sees if the write-protect indicator hole **114** is open and may or may not perform a write operation on the optical disk **102** in the disk cartridge **101** depending on whether the hole **114** is opened or closed. For example, if the movable member **115** closes the write-protect indicator hole **114,** writing on the optical disk **102** is permitted. On the other hand, unless the write-protect indicator hole **114** is closed with the movable member **115,** writing on the optical disk **102** is prohibited. The movable member **115** may be moved by the user. That is to say, the user can determine whether writing on the optical disk **102** is permitted or prohibited.

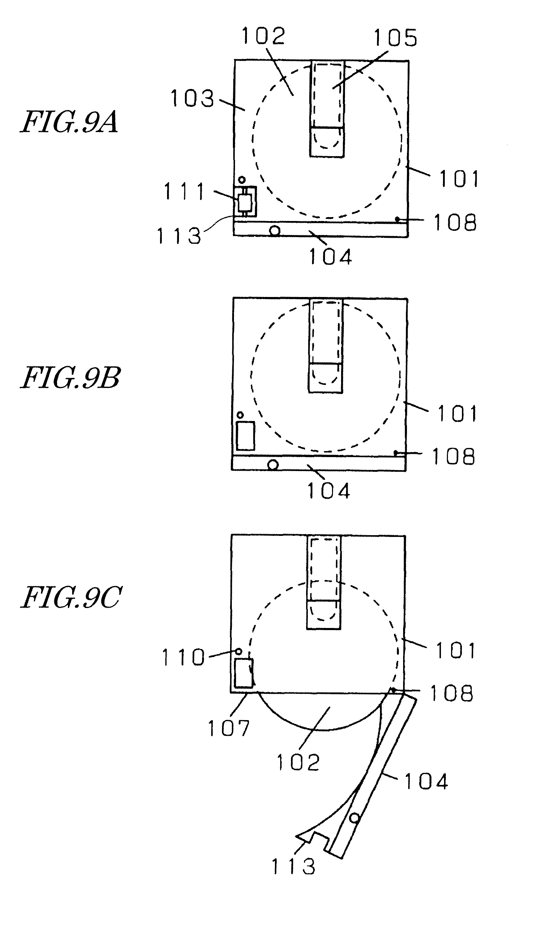

Next, it will be described with reference to FIGS. **9A** through **9C** how to remove the optical disk **102.** As shown in FIG. **9A**, if the optical disk **102** has never been removed from the disk cartridge **101,** the tab portion **111** is still connected to the disk cartridge **101.** However, once the tab portion **111** is removed by cutting off the connecting portions **112** shown in FIG. **9A**, the disk cartridge **101** looks as shown in FIG. **9B.** Since the tab portion **111** has been removed, the tab portion **111** is now disengaged from the groove portion **113** of the lid **104.** In this situation, the opening **107** can be uncovered by turning the lid **104** on the shaft **108.** As a result, the optical disk **102** can be removed as shown in FIG. **9C.**

Once the optical disk **102** has been removed, the disk cartridge 101 no longer has the tab portion **111.** That is why the user can see easily whether the disk **102** stored has ever been removed or not. Also, by sensing whether the tab portion **111** is still attached or not, the optical disk drive can choose an appropriate method of writing to the disk. For example, suppose that once removed from the disk cartridge **101,** the optical disk **102** will get soiled with finger marks or dust to the point that the writing to the disk **102** should be affected. On this supposition, if the tab portion **111** is still attached to the disk cartridge, then the optical disk **102** has never been removed from the disk cartridge **101.** In that case, there is a little chance that the optical disk **102** has got soiled with finger marks or dust and writing should be done properly on the optical disk **102.** On the other hand, if the tab portion **111** is no longer attached to the disk cartridge **101,** the optical disk **102** has been removed from the disk cartridge **101** at least once. For that reason, chances are the optical disk **102** has got soiled with finger marks or dust and writing could not be done properly on the optical disk **102.** In that case, even if the write-protect indicator hole **114** shows that writing is permitted, writing on such a disk may still be prohibited or not permitted until the disk has been checked for any defects.

Disk cartridges with such a structure have been adopted to store a DVD disk and have been used more and more extensively as DVD recorders have become increasingly popular. According to the technique disclosed in Patent Document No. 1 mentioned above, a DVD-RAM disk, which is one of the most popular types of DVDs today, can be removed from its disk cartridge. It is also possible to sense that the optical disk **102** should have been removed from the disk cartridge **101.** And if the optical disk drive prohibits writing or checks the DVD-RAM disk for any defects based on the result of sensing, data can be written on the DVD-RAM disk with good reliability.

The DVD-RAM disks available now include DVD-RAM disks with dual data storage layers and DVD-RAM disks with a single data storage layer. That is why two types of disk cartridges have been used for these two types of disks. Hereinafter, conventional disk cartridges for DVD-RAMs will be further described.

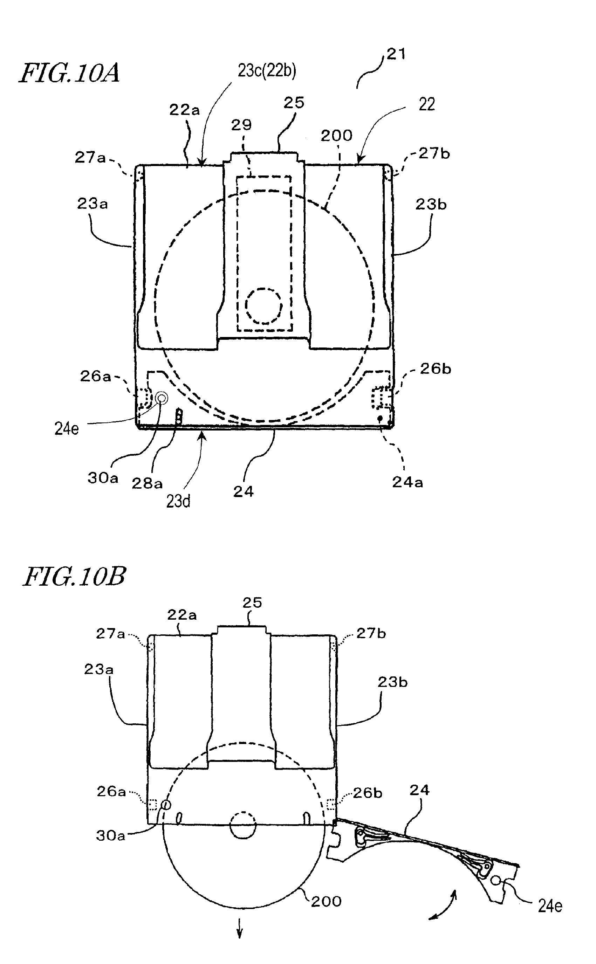

FIGS. **10A** and **10B** illustrate a disk cartridge **21** to store an optical disk **200** with a single data storage layer. As shown in FIG. **10A,** the disk cartridge **21** includes a cartridge body **22,** a shutter **25,** and a lid **24.** The cartridge body **22** includes a pair of opposed principal surfaces **22a, 22b,** a pair of side surfaces **23a, 23b** that defines the gap between the principal surfaces **22a, 22b,** and another side surface **23c** interposed between the side surfaces **23a, 23b.** The principal surfaces **22a, 22b** and the side surfaces **23a, 23b** and 23c define the six sides of a parallel hexahedron. The cartridge body **22** has an opening **23d** that is opposed to the side surface **23c.** A shaft **23a** is arranged near the opening **23d** and side surface 23b of the cartridge body 22 and the lid **24** is attached so as to rotate on the shaft **23a.**

The principal surfaces **22a, 22b** have windows **29** that partially expose the optical disk **102.** The shutter **25** includes a pair of main portions to close the windows **29** of the principal surfaces **22a, 22b** and a connecting portion to connect the two main portions together. By sliding the connecting portion along the side surface **23c**, the main portions open or close the windows **29.**

The side surfaces **23a, 23b** have recessed gripper slots **26a, 26b** near the opening **23d** and also have V-groove auto-loading detents **27a, 27b** near the side surface **23c.** The gripper slots **26a, 26b** fit the protrusions of the optical disk drive, thereby positioning the disk cartridge **21** in the optical disk drive. Both of the recessed gripper slots **26a, 26b** and V-groove auto-loading detents **27a, 27b** reach the principal surface **22b** to make notches on the principal surface **22b** but do not reach the principal surface **22a.** That is why the recessed gripper slots **26a, 26b** and V-groove auto-loading detents **27a, 27b** are shown by dotted lines in FIG. **10A.**

The lid **24** has a write-protect indicator **28a** that shows whether the data storage layer of the optical disk **200** is write enabled or write disabled. The write-protect indicator **28a** is a slide switch. By sliding the indicator **28a,** a hole can be created or filled in a predetermined region of the cartridge body **22.** A sensing mechanism, which is provided for the tray of the optical disk drive (not shown), determines whether the hole is created or filled. If the hole has been created, the optical disk drive determines that writing is prohibited. On the other hand, if the hole has been filled, the optical disk drive determines that writing is permitted.

The lid **24** further includes a lock pin **30a,** which fits into the hole **24e** of the principal surfaces **22a** and **22b,** thereby keeping the lid **24** from rotating on the shaft **24a** and eventually prohibiting the user from removing the optical disk **200** from the cartridge **21**. As shown in FIG. **10B,** when the lock pin **30a** is unlocked, the lock pin **30a** is disengaged from the hole **24e**, thus letting the lid **24** rotate freely on the shaft **24a.** As a result, the optical disk **200** can be removed through the opening **23d.**

The optical disk **200** stored in the disk cartridge **21** shown in FIGS. **10A** and **10B** has a data storage layer on only one side thereof. In FIGS. **10A** and **10B,** the data storage layer of the optical disk **200** faces the principal surface 22b. The other side of the optical disk **200** facing the principal surface **22a** may have a label printed thereon or may even have a non-recordable information layer (e.g., the innermost lead-in area of the optical disk **200** may have been processed so as to prohibit the user from reading information from that layer).

As described above, neither the gripper slots **26a, 26b** nor the auto-loading detents **27a, 27b** reach the principal surface **22a** (i.e., the principal surface **22a** has no openings that communicate with the gripper slots **26a, 26b** or the auto-loading detents **27a, 27b).** That is why even if the user attempted to load this disk cartridge **21** upside down into an optical disk drive to subject the non-recordable side to a write operation by mistake, the protrusions, which are provided for the tray of the optical disk drive so as to fit into the gripper slots **26a, 26b,** would contact with the principal surface **22a,** thus blocking the user from loading the disk cartridge **21** upside down by mistake. Also, since the optical disk **200** has a data storage layer on only one side thereof, only one write-protect indicator is provided for the disk cartridge **21.**

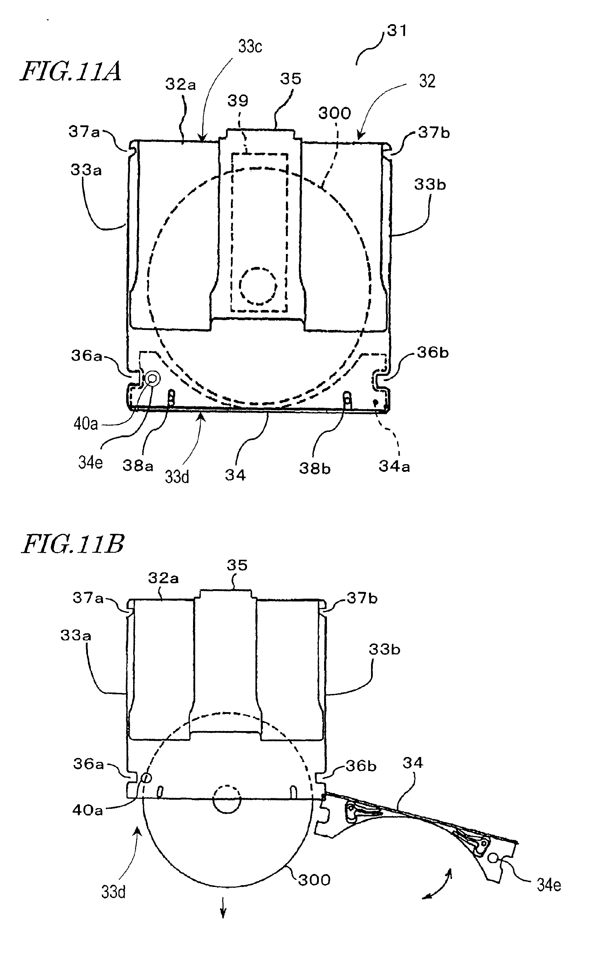

FIGS. **11A** and **11B** illustrate a disk cartridge **31** to store an optical disk **300** with data storage layers on both sides. Recently, more and more people tend to record moving picture audio/video signals on optical disks, not videotapes. And as those applications require sufficient storage capacity, there is a growing demand for such double-sided optical disks with two data storage layers.

As shown in FIG. **11A,** the disk cartridge **31** includes a cartridge body **32,** a shutter **35,** and a lid **34.** The cartridge body **32** includes a pair of opposed principal surfaces **32a, 32b,** a pair of side surfaces **33a, 33b** that defines the gap between the principal surfaces **32a, 32b,** and another side surface **33c** interposed between the side surfaces **33a, 33b.** The principal surfaces **32a, 32b** and the side surfaces **33a, 33b** and **33c** define the six sides of a parallel hexahedron. The cartridge body **32** has an opening **33d** that is opposed to the side surface **33c.** A shaft **33a** is arranged near the opening **33d** and side surface 33b of the cartridge body **32** and the lid **34** is attached so as to rotate on the shaft **33a.**

The principal surfaces **32a, 32b** have windows **39** that partially expose the optical disk **300.** The shutter **35** includes a pair of main portions to close the windows **39** of the principal surfaces **32a, 32b** and a connecting portion to connect the two main portions together. By sliding the connecting portion along the side surface **33c,** the main portions open or close the windows **39.**

The side surfaces **33a, 33b** have recessed gripper slots **36a, 36b** near the opening **33d** and also have V-groove auto-loading detents **37a, 37b** near the side surface **33c.** The gripper slots **36a,** 36b fit the protrusions of the optical disk drive, thereby positioning the disk cartridge **23** in the optical disk drive. Both of the recessed gripper slots **36a, 36b** and V-groove auto-loading detents **37a, 37b** reach the principal surfaces **32a, 32b** to make notches on the principal surfaces **22a, 22b.**

The lid **34** has write-protect indicator **38a, 38b** that show whether the data storage layers of the optical disk **300** are write enabled or write disabled. The write-protect indicators **38a, 38b** are slide switches. By sliding the indicators **38a, 38b,** a hole can be created or filled in a predetermined region of the cartridge body **22.** A sensing mechanism, which is provided for the tray of the optical disk drive (not shown), determines whether the hole is created or filled. If the hole has been created, the optical disk drive determines that writing is prohibited. On the other hand, if the hole has been filled, the optical disk drive determines that writing is permitted.

The lid **34** further includes a lock pin **40a,** which fits into the hole **34e** of the principal surfaces **32a** and **32b,** thereby keeping the lid **34** from rotating on the shaft **34a** and eventually prohibiting the user from removing the optical disk **300** from the cartridge **31.** As shown in FIG. **11B,** when the lock pin **40a** is unlocked, the lock pin **40a** is disengaged from the hole 34e, thus letting the lid 34 rotate freely on the shaft **34a.** As a result, the optical disk **300** can be removed through the opening 33d.

The optical disk **300** stored in the disk cartridge **31** shown in FIGS. **11A** and **11B** has data storage layers on both sides thereof. That is why the disk cartridge **31** needs to be loaded into the optical disk drive properly such that either the principal surface **32a** or the principal surface **32b** is opposed to the optical pickup of the optical disk drive.

For that purpose, both of the gripper slots **36a, 36b** and the auto-loading detents **37a, 37b** reach the principal surfaces **32a, 32b** (i.e., the principal surfaces **22a, 22b** have openings that communicate with the gripper slots **36a, 36b** and the auto-loading detents **37a, 37b).** That is why no matter which side of the disk cartridge **31** is facing the optical pickup, the protrusions always fit into the gripper slots **26a, 26b** and the disk cartridge **31** can be loaded into the optical disk drive properly. Also, two write-protect indicators are provided for the disk cartridge **31** as described above.

As can be seen, the conventional disk cartridges for DVD-RAM disks have slightly different shapes, depending on whether the disk stored there has a single data storage layer on only one side thereof or two data storage layers on both sides thereof, so as to be loaded into the optical disk drive properly.

Also, the conventional disk cartridges use write-protect indicator(s) to allow the user to permit or prohibit writing on the data storage layer(s) and remove the optical disk.
**Patent Document No. 1:** Japanese Patent Application Laid-Open Publication No. 9-045032
**Patent Document No. 2:** PCT International Application Japanese National Phase Publication No. 2001-513935

### DISCLOSURE OF INVENTION

### PROBLEMS TO BE SOLVED BY THE INVENTION

Recently, as DVD recorders and DVD drives for use as terminal devices for computers have become more and more popular, there is an increasing demand for cheaper rewritable DVD disks (which will be simply referred to herein as "DVD disks"). Meanwhile, the users tend to use selectively either a single-sided rewritable DVD disk or a double-sided rewritable DVD disk depending on the size of the data to be stored, and there is a continuing demand for both of these two types of disks.

However, the disk cartridge **21** for a single-sided rewritable DVD disk and the disk cartridge **31** for a double-sided rewritable DVD disk have mutually different shapes as described above. To manufacture these two types of disk cartridges, two different sets of dies and other manufacturing equipment are needed. Since such manufacturing equipment is expensive, it is currently difficult to cut down the manufacturing costs of rewritable DVD disks. Such a problem arises not just in rewritable optical disks but also in write-once optical disks and even in various other types of data storage media as well.

In order to overcome the problems described above, an object of the present invention is to provide a disk cartridge that can store a single-sided data storage medium and that can be manufactured at a reduced cost.

### MEANS FOR SOLVING THE PROBLEMS

A disk cartridge according to the present invention includes a cartridge body, a shutter, and a lid. The cartridge body includes: first and second principal surfaces that are opposed to each other; a storage space that is provided between the first and second principal surfaces to store a disklike data storage medium therein; windows that are cut through the first and second principal surfaces to partially expose the data storage medium being stored in the storage space; an opening that is located between the first and second principal surfaces such that the data storage medium stored in the storage space is removable from the storage space; and write-protect indicator holes that are provided through the first and second principal surfaces to prohibit writing on the data storage medium stored in the storage space. The shutter is supported movably with respect to the cartridge body so as to open and close the windows of the first and second principal surfaces. The lid is provided to cover and uncover the opening of the cartridge body. The cartridge body is shaped such that both of the first and second principal surfaces are able to be opposed to a pickup of the optical disk drive when the disk cartridge is loaded into the optical disk drive. Of the two write-protect indicator holes that are cut through the first and second principal surfaces, only the hole of the second principal surface is provided with a write enable/disable selecting mechanism that covers or uncovers the write-protect indicator hole.

In one preferred embodiment, the cartridge body further includes: first and second side surfaces, which are adjacent to the opening and opposed to each other; a third side surface, which is adjacent to the first and second side surfaces and opposed to the opening; gripper slot portions, which are cut on the first and second side surfaces near the opening; and auto-loading detents, which are cut on the first and second side surfaces near the third side surface.

In this particular preferred embodiment, the gripper slot portions and the auto-loading detents are both recessed and reach the first and second principal surfaces so as to define notches on the first and second side surfaces.

In another preferred embodiment, the lid is supported near one end thereof so as to be rotatable with respect to the cartridge body.

In still another preferred embodiment, either the lid or the cartridge body has a tab portion that is attached thereto in a removable position, and either the cartridge body or the lid has an engaging portion to engage with the tab portion.

In yet another preferred embodiment, if the cartridge body is arranged vertically such that the third side surface is located over the opening, the second side surface is located on the right-hand side of the first principal surface. The cartridge body has, on the first principal surface, a circular location hole, which has a diameter of 4.00 mm to 4.05 mm and of which the center is set at a distance of 22.8 mm to 23.2 mm from the outside surface of the lid and at a distance of 11.0 mm to 11.4 mm from the second side surface. The write-protect indicator hole has a circular shape, which has a diameter of 3.1 mm to 3.2 mm and of which the center is set at a distance of 18.45 mm to 18.55 mm from the center of the location hole toward the lid and at a distance of 8.95 mm to 9.05 mm from the center of the location hole toward the first side surface.

In yet another preferred embodiment, the disk cartridge further includes a data storage medium, which includes a recordable data storage layer on only one side thereof and which is stored in the storage space of the cartridge body such that the data storage layer faces the second principal surface.

In this particular preferred embodiment, the data storage layer includes a data area, on which user data is written, and a lead-in area, which is located inside of the data area to store information representing where the data belongs.

### EFFECTS OF THE INVENTION

According to the present invention, of the two write-protect indicator holes that are cut through the two principal surfaces of a cartridge body, only the hole of one principal surface is provided with a write enable/disable selecting mechanism that can cover the write-protect indicator hole. That is why before the optical pickup accesses the data recordable side, the optical disk drive can know that no data can be written on the other side of the optical disk, which is opposed to the other principal surface with a write-protect indicator hole that is not provided with the write enable/disable selecting mechanism.

In addition, since the cartridge body is shaped such that both of the two principal surfaces can be opposed to the optical pickup when the disk cartridge is loaded into the optical disk drive, the disk cartridge can be manufactured using the same dies as double-sided disk cartridges. As a result, the manufacturing cost of the disk cartridge can be cut down.

### BRIEF DESCRIPTION OF DRAWINGS

FIG. **1A** is a plan view illustrating a preferred embodiment of a disk cartridge according to the present invention.
FIG. **1B** is a plan view showing the other side of the disk cartridge shown in FIG. **1A.**
FIG. **2** is a plan view showing how the disk cartridge shown in FIG. **1A** looks when its lid is opened.
FIG. **3** is a perspective view illustrating the structure of a lock pin, provided for the lid, and its surrounding members.
FIG. **4A** shows the write-protect indicator hole **10b** and its surrounding members of the plan view shown in FIG. **1A** on a larger scale.
FIG. **4B** shows the write-protect indicator hole 10c and its surrounding members of the plan view shown in FIG. **1B** on a larger scale.
FIG. **5** shows a situation where an optical disk has been stored properly in the disk cartridge shown in FIG. **1A.**
FIG. **6** shows a situation where an optical disk has been stored upside down in the disk cartridge shown in FIG. **1A.**
FIG. **7** is a plan view illustrating a conventional disk cartridge.
FIG. **8** illustrates the tab portion and its surrounding members of the disk cartridge shown in FIG. **7.**
FIGS. **9A, 9B** and **9C** show how to open the lid of the disk cartridge shown in FIG. **7.**
FIG. **10A** is a plan view illustrating a conventional single-sided rewritable disk cartridge.
FIG. **10B** is a plan view showing how the single-sided rewritable disk cartridge shown in FIG. **10A** looks when its lid is opened.
FIG. **11A** is a plan view illustrating a conventional double-sided rewritable disk cartridge.
FIG. **11B** is a plan view showing how the double-sided rewritable disk cartridge shown in FIG. **11A** looks when its lid is opened.

### DESCRIPTION OF REFERENCE NUMERALS

- **1**: disk cartridge
- **2**: cartridge body
- **4**: lid
- **4b**: lock pin
- **5**: shutter
- **6a, 6b**: gripper slot
- **7a, 7b**: auto-loading detent
- **8a, 8c**: alignment hole
- **8b, 8d**: location hole
- **10a**: write enable/disable selecting mechanism
- **10b, 10c**: write-protect indicator hole
- **13**: window
- **400**: optical disk

### BEST MODE FOR CARRYING OUT THE INVENTION

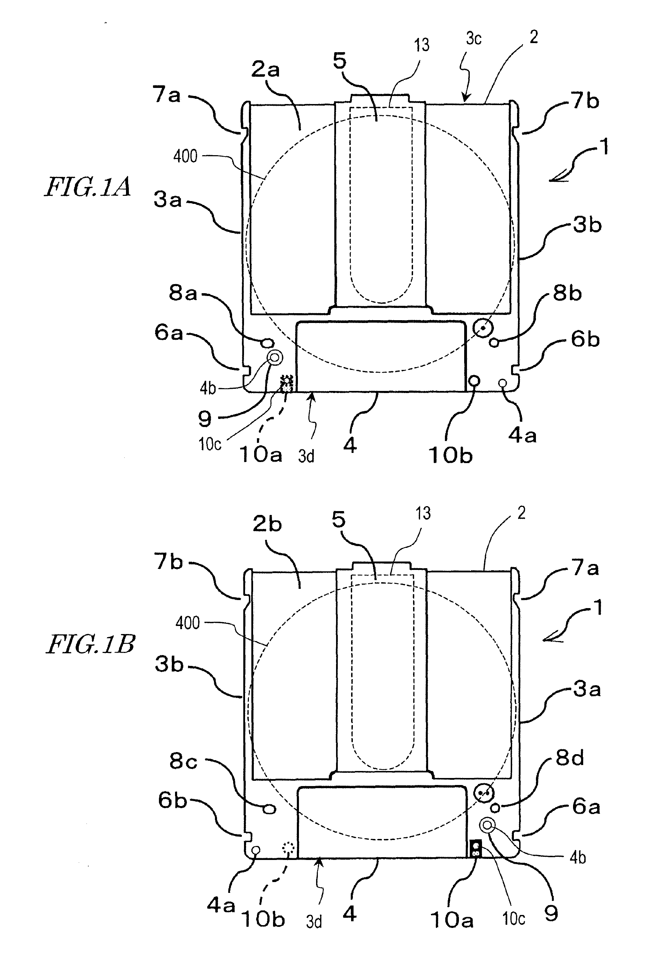

Hereinafter, preferred embodiments of a disk cartridge according to the present invention will be described with reference to the accompanying drawings. FIGS. **1A** and **1B** are plan views illustrating the structure of a disk cartridge **1.** Specifically, FIG. **1A** is a plan view illustrating the disk cartridge **1** with the first side of the disk (which is usually called "side A") faced down. FIG. **1B** is a plan view illustrating the disk cartridge **1** with the second side of the disk (which is usually called "side B") faced down. The disk cartridge **1** stores a disklike data storage medium **400,** only one side of which includes a rewritable storage layer. In the following description, the data storage medium **400** is supposed to be an optical disk. However, the disk cartridge of the present invention can be used effectively not only in optical disks but also in magneto-optical disks and other types of data storage media as well. Also, in the following example, the data storage medium is supposed to be a rewritable optical disk. Alternatively, any other recordable data storage medium such as a write-once disk may also be used.

Usually, if an optical disk drive is loaded horizontally with either an optical disk or a disk cartridge storing an optical disk, then the optical pickup accesses the lower side (i.e., back surface) of the disk to read and write data from/on the disk. However, when the user picks and looks at the optical disk or the disk cartridge, the lower side (back surface) does not face the user and is invisible to him or her. That is why the label such as "Side A" or "Side B" to recognize the sides of the disk is printed on the opposite side of the disk. For example, if the user picks an optical disk or a disk cartridge and loads it into an optical disk drive with "Side A" shown on the upside, then read/write operations are performed on the other side of the disk, which is opposite to Side A.

The disk cartridge **1** includes a cartridge body **2,** a lid **4** and a shutter **5.** The cartridge body **2** has first and second principal surfaces **2a, 2b** that are opposed to each other, first and second side surfaces **3a, 3b** that are also opposed to each other, and a third side surface **3c.** The first, second and third side surfaces **3a, 3b** and **3c** define the gap between the first and second principal surfaces **2a, 2b** and form a storage space to store the optical disk **400** along with the first and second principal surfaces **2a, 2b**. An opening **3d** is provided between the first and second principal surfaces **2a, 2b** so as to be opposed to the side surface **3c**. The size and shape of the opening **3d** are defined such that the optical disk **400** can be easily removed from the storage space.

The first and second principal surfaces **2a** and **2b** have windows **13** that partially expose the optical disk 400 in the storage space, and also have write-protect indicator holes **10b** and **10e,** respectively, showing that writing on the optical disk **400** is prohibited.

The first and second side surfaces **3a** and 3b have auto-loading detents **7a, 7b,** respectively, near the third side surface **3c.** The auto-loading detents **7a, 7b** have a recessed shape with a sloped side closer to the opening **3d.** The first and second side surfaces **3a** and **3b** also have gripper slots **6a, 6b** closer to the opening **3d.** The gripper slots **6a, 6b** have an indented shape with a rectangular cross section. As shown in FIGS. **1A** and **1B,** the auto-loading detents **7a, 7b** and gripper slots **6a, 6b** reach the first and second principal surfaces **2a** and **2b** to define notches with respective cross sections on the first and second principal surfaces **2a** and **2b.** That is why protrusions provided for the optical disk drive can be inserted vertically into the auto-loading detents **7a, 7b** and gripper slots **6a, 6b** from over or under either the first principal surface **2a** or the second principal surface **2b.** Consequently, the cartridge body **2** is shaped such that both of the first and second principal surfaces **2a, 2b** can be opposed to the pickup of the optical disk drive when the disk cartridge is loaded into the optical disk drive.

The first and second principal surfaces **2a** and **2b** have windows **13** that partially expose the optical disk 400 to let the optical head access the optical disk and perform read/write operations on it.

The shutter **5** is supported movably with respect to the cartridge body **2** so as to open and close the windows **13** of the first and second principal surfaces **2a** and **2b.** More specifically, the shutter **5** includes a pair of main portions to shut the windows **13** of the first and second principal surfaces **2a, 2b** and a connecting portion to connect the two main portions together. The connecting portion is attached to the third side surface **3c** so as to slide along the third side surface **3c** toward either the first side surface **3a** or the second side surface **3b**. That is why no matter whether the first principal surface **2a** or the second principal surface **2b** is opposed to the pickup of the optical disk drive while the disk cartridge is being loaded into the optical disk drive, one of the windows **13** can always be opened by sliding the shutter in either direction in the optical disk drive.

The first and second principal surfaces **2a** and **2b** of the cartridge body **2** have holes **8a, 8b, 8c** and **8d** to receive alignment pins for use to position the disk cartridge **1** in the optical disk drive. More specifically, the first and second principal surfaces **2a** and **2b** have elliptical alignment holes **8a, 8c** that are elongated perpendicularly to the first and second side surfaces **3a** and **3b.** The first and second principal surfaces **2a** and **2b** also have circular location holes **8b, 8d.** The alignment hole **8a** and the location hole **8d** are located close to the first side surface **3a,** while the alignment hole **8c** and the location hole **8b** are located close to the second side surface **3b.** The alignment holes **8a, 8c** and location holes **8b, 8d** may be either through holes or non-through holes with a predetermined depth (of 1.2 mm or more, for example), which is deep enough to receive the alignment pins firmly.

As will be described in detail later, the first principal surface **2a** of the cartridge body **2** has write-protect indicator holes **10b, 10c.** If the write-protect indicator holes **10b** and **10c** are opened, the optical disk drive senses the opened state of the write-protect indicator holes **10b** and **10c** using a sensing section thereof. Based on the sensing result, the optical disk drive is set so as not to write on the optical disk **400** in the disk cartridge **1.**

As will also be described in detail later, of the two write-protect indicator holes **10b, 10c,** only the write-protect indicator hole **10c** is provided with a write enable/disable selecting mechanism **10a** that covers or uncovers the write-protect indicator hole **10c.**

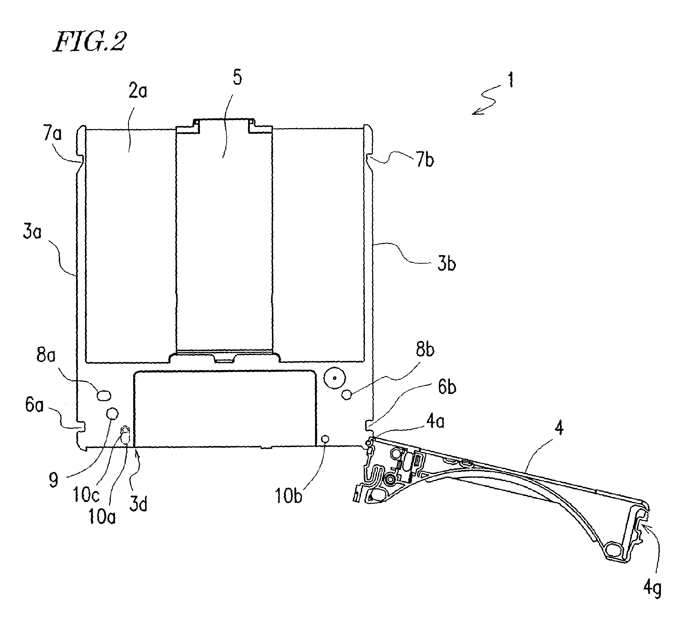

The lid **4** covers and uncovers the opening **3d** of the cartridge body **2.** FIG. **2** shows a situation where the lid **4** has uncovered the opening **3d.** The lid **4** is attached to the cartridge body **2** so as to turn on the shaft **4a,** which is arranged near the opening **3d** and second side surface **3b** of the cartridge body **2.** As shown in FIG. **2,** an engaging portion **4g** is arranged at the other end of the lid **4,** which is opposite to the one end with the shaft **4a,** so as to engage with the cartridge body **2** when the opening 3d is covered.

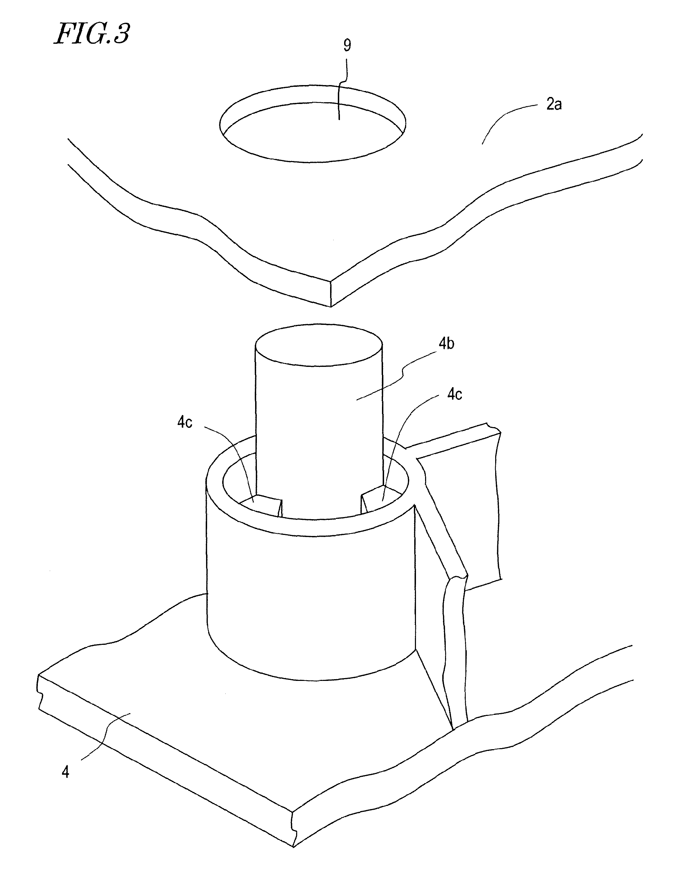

If the lid **4** has ever been opened at least once, the optical disk **400** may have been removed from the disk cartridge **1.** That is why a tab showing whether or not the lid 4 has ever been opened is provided for the disk cartridge **1.** In this preferred embodiment, the tab is a lock pin **4b**, which is attached in a removable position to the lid 4. FIG. 3 illustrates the lock pin **4b** provided for the lid 4 and its surrounding members on a larger scale. As shown in FIG. **3,** the lock pin **4b** is attached to the lid **4** with a number of thin connectors **4c.** The first principal surface **2a** of the cartridge body **2** has a hole **9** that receives the lock pin **4b**. If the lid **4** has never been opened, the lock pin **4b** is inserted into the hole **9** so as to fill the hole **9** at least partially.

Although not shown in FIG. **3,** the lock pin **4b** actually extends through the second principal surface **2b** and is inserted into the hole **9** of the second principal surface **2b** to fill the hole **9** partially as shown in FIG. **1B.** That is why if the lid **4** has never been opened, the holes **9** of the first and second principal surfaces **2a** and **2b** should be closed with the lock pin 4b. That is to say, the holes **9** tell the removal history.

To remove the optical disk **400** from the disk cartridge **1** by turning the lid **4,** the lock pin **4b** may be pressed with something with a sharp end such as a ballpoint pen. Then, the connectors **4c** will be broken and the lock pin **4b** will be cut off the lid **4.** At the same time, the lock pin **4b** will also be disengaged from the holes **9** of the first and second principal surfaces **2a** and **2b**. If the lid **4** is turned with the engaging portion 4g pressed, the opening **3d** is uncovered. Once the lock pin **4b** has been cut off the lid **4,** the holes **9** of the first and second principal surfaces **2**a and **2b** of the disk cartridge **1** remain opened. That is why when loaded with the disk cartridge **1,** the optical disk drive sees if the holes **9** are opened and determines what to do based on the sensing result. For example, if the optical disk drive has sensed the holes **9** are opened, the optical disk **400** may have been removed once, and therefore, the optical disk **400** is checked for defects before subjected to a write operation.

In this preferred embodiment, the lock pin **4b** as a tab is provided for the lid **4.** Alternatively, the lock pin may be attached removably to the cartridge body **2** with connectors so as to partially close the holes **9** of the first and second principal surfaces **2a** and **2b.** In that case, an engaging portion such as a through hole is provided for the lid **4** so as to receive the lock pin attached to the cartridge body **2.**

Also, in the preferred embodiment described above, the lid **4** has a structure that is supported to the cartridge body **2** so as to turn on the shaft **4a.** However, the lid **4** may have any other structure as long as the lid **4** can cover and uncover the opening 3d. For example, the lid **4** may have a pair of cuplike holding portions and have such a structure that holds the optical disk **300** between the cuplike holding portions when the lid **4** is pulled off the cartridge body **2.** Alternatively, as disclosed in Patent Document No. 2, the lid **4** may have a structure that opens along with a shutter.

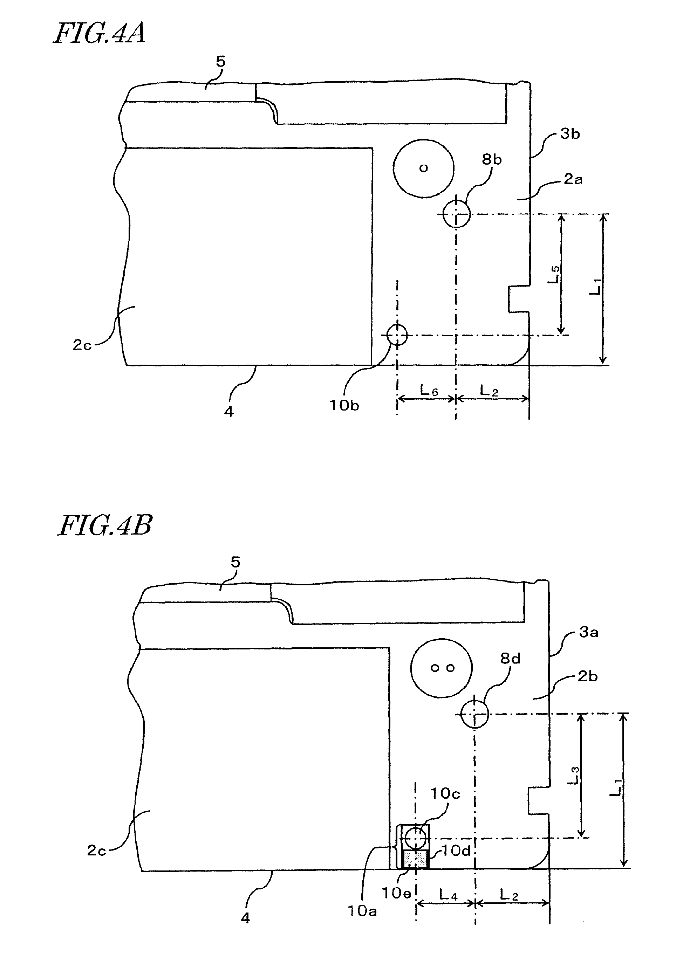

Next, the write-protect indicator holes **10b, 10c** will be described in detail. FIG. **4A** illustrates the structures of the write-protect indicator hole **10b** and its surrounding members on the first principal surface **2a.** FIG. **4B** illustrates the structure of the write-protect indicator hole **10c** with the write enable/disable selecting mechanism **10a** and their surrounding members on the second principal surface **2b.** As in FIGS. **1A** and **1B,** these drawings are illustrated with the third side surface **3c** and opening **3d** located at the top and the bottom of the drawings.

As described above, when the optical disk drive is horizontally loaded with a disk cartridge that stores an optical disk therein, the optical pickup accesses the lower side (i.e., back surface) of the disk cartridge to read and write data from/on the disk. At this time, the optical disk drive senses whether the alignment hole, location hole, write-protect indicator hole and hole showing the removal history on the lower side are opened or closed. That is why the write-protect indicator hole **10b** is used to prohibit writing on one storage layer of the optical disk that faces the first principal surface **2a.** In the same way, the write-protect indicator hole **10c** is used to prohibit writing on the other storage layer of the optical disk that faces the second principal surface **2b**.

As shown in FIGS. **4A** and **4B,** the write enable/disable selecting mechanism **10a** is provided for the write-protect indicator hole **10c** on the second principal surface **2b** but no write enable/disable selecting mechanism **10a** is provided for the write-protect indicator hole **10b** on the first principal surface **2a.** That is why the user cannot cover the write-protect indicator hole **10b** on the first principal surface **2a.** That is to say, writing on that side of the optical disk **400,** facing the first principal surface **2a** of the disk cartridge **1,** is always prohibited.

On the other hand, the write-protect indicator hole **10c** on the second principal surface **2b** is provided with the write enable/disable selecting mechanism **10a.** In this preferred embodiment, the write enable/disable selecting mechanism **10a** includes a groove **10d,** which is cut on the second principal surface **2b,** and a slider **10e**, which is arranged movably along the groove **10d.** The groove **10d** is a recess on the second principal surface **2b** and the write-protect indicator hole **10c** is located at the bottom of the groove **10d.** The slider **10e** arranged in the groove **10d** has its upper surface almost leveled with the second principal surface **2b**.

In this preferred embodiment, the write enable/disable selecting mechanism **10a** is provided for the cartridge body **2.** However, the write enable/disable selecting mechanism **10a** may also be provided for the lid **4** as long as the mechanism **10a** can cover and uncover the write-protect indicator hole **10c.** Also, the write enable/disable selecting mechanism does not have to have the slider and groove combination but may have any other structure.

FIG. 4B illustrates a situation where the write-protect indicator hole **10c** has been uncovered. If the disk cartridge **1** in such a state is loaded into the optical disk drive, the optical disk drive senses the write-protect indicator hole **10c** open. Then, the optical disk drive prohibits writing on that side of the optical disk 400 facing the second principal surface **2b** of the disk cartridge **1.**

The user can cover the write-protect indicator hole **10c** by turning the slider **10e.** If the disk cartridge **1** in such a state is loaded into the optical disk drive, the optical disk drive senses the write-protect indicator hole **10c** closed. Then, the optical disk drive permits writing on that side of the optical disk **400** facing the second principal surface **2b** of the disk cartridge **1.** In this manner, the user can selectively enable or disable the drive to write on that side of the optical disk **400** facing the second principal surface **2b** of the disk cartridge **1** by using the write enable/disable selecting mechanism **10a.**

The disk cartridge **1** is positioned in the optical disk drive with reference to the location holes **8b, 8d** and the alignment holes **8a, 8c.** That is why the write-protect indicator holes **10b** and **10c** are also preferably located with reference to these holes (among other things, with respect to the location holes **8b** and **8d** that are close to the write-protect indicator hole **10b, 10c).** If the optical disk **400** is a DVD-RAM, the locations of the location holes **8b** and **8d** are defined by JIS standard X6244. More specifically, supposing the distance from the outside surface of the lid **4** to the center of the location hole **8b** is L₁ and the distance from the second side surface **3b** to the center of the location hole **8b** is L₂, L₁ and L₂ preferably satisfy 22.8 mm ≦ L₁ ≦ 23.2 mm and 11.0 mm ≦ L₂ ≦ 11. 4 mm and the diameter R₁ of the location hole **8b** preferably satisfies 4.00 mm ≦R₁≦4.05 mm.

The center of the write-protect indicator hole **10b** is located at a distance L₅ from the center of the location hole **8b** toward the lid **4** and at a distance L₆ from the center of the location hole **8b** toward the first side surface **3a** (see FIG. **1A).** L₅ and L₆ preferably satisfy 18.45 mm≦L5≦18.55 mm and 8.95 mm≦L6≦9.05 mm, respectively, the diameter R₂ of the write-protect indicator hole **10b** preferably satisfies 3.1 mm ≦ R₂ ≦ 3.2 mm and the depth D₁ of the hole **10b** preferably satisfies 5.0 mm≦D₁.

On the other hand, the center of the location hole **8d** is located at the distance L₁ from the outside surface of the lid **4** and at the distance L₂ from the second side surface **3b** as shown in FIG. **4B.**

The center of the write-protect indicator hole **10c** is located at a distance L₃ from the center of the location hole **8c** toward the lid **4** and at a distance L₄ from the center of the location hole **8d** toward the second side surface 3b (see FIG. **1B).** L₃ and L₄ preferably satisfy 18.3 mm ≦ L₃ ≦ 18.7 mm and 8.8 mm ≦ L₄ ≦ 9.2 mm, respectively, the radius R₃ of the write-protect indicator hole **10c** preferably satisfies 3.00 mm ≦ R₃ and the depth D₂ of the hole **10c** preferably satisfies 5.0 mm ≦ D₂ .

The write-protect indicator hole **10b** needs to be detected by the detecting section of the optical disk drive to prohibit writing on that side of the optical disk **400** facing the first principal surface **2a** of the disk cartridge 1 without fail. For that purpose, the tolerance of the center of the write-protect indicator hole **10b** is set stricter than that of the write-protect indicator hole **10c.** In addition, by setting the tolerance of the diameter of the write-protect indicator hole **10b** greater than the minimum value of the diameter of the write-protect indicator hole **10c** and by decreasing the maximum value of the tolerance, it is possible to prevent the optical disk drive from detecting the write-protect indicator hole **10b** by mistake. By setting the location and size of the write-protect indicator hole **10b** within the range described above, the probability of erroneous detection can be reduced and it is possible to prohibit the optical disk drive from writing on that side of the optical disk **400** facing the first principal surface **2a** of the disk cartridge **1.**

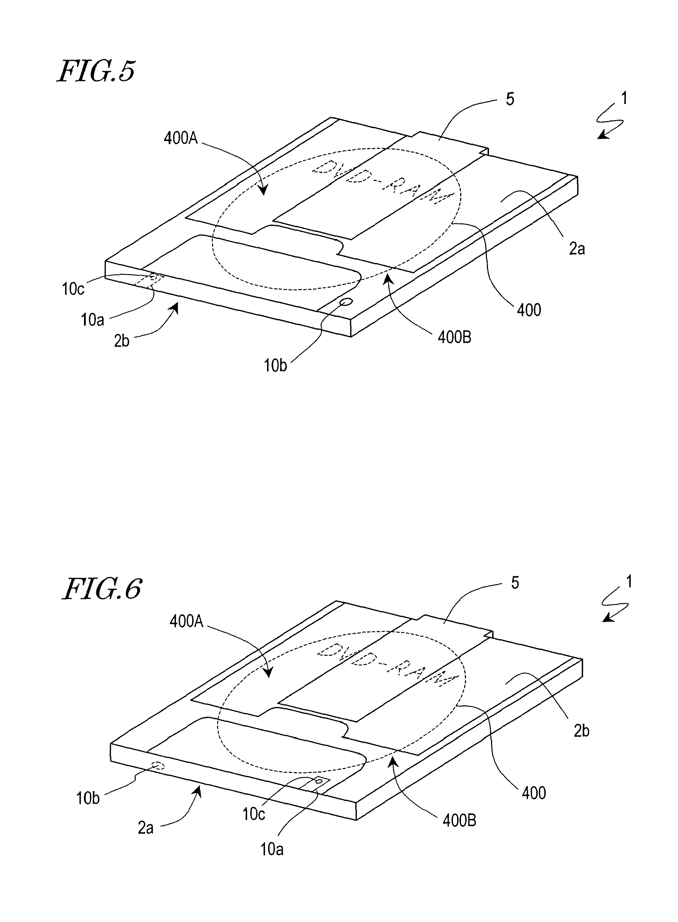

Next, it will be described with reference to FIGS. **5** and **6** how to write data to the disk cartridge **1.** As shown in FIG. 5, the optical disk **400** is a single-sided rewritable type and has a data recordable side **400B** and a non-recordable side **400A** on which no data can be written. The non-recordable side **400A** may either be a label side on which the storage capacity or the disk type of the optical disk **400** is printed (e.g., a label side on which a DVD-RAM logo is printed as a disk type in FIG. **5)** or have a data storage layer on which no data can be written. The data recordable side 400B has a rewritable data storage layer, which includes a data area where user data can be written and a lead-in area, located inside of the data area, to store information representing where the data belongs.

The non-recordable side **400A** of the optical disk **400** faces the first principal surface **2a** with the write-protect indicator hole **10b,** while the data recordable side 400B faces the second principal surface **2b** with the write-protect indicator hole **10c,** which is provided with the write enable/disable selecting mechanism **10a.** The disk cartridge 1 stores the optical disk 400 in such a state with the hole 9 filled with the lock pin **4b** as shown in FIGS. **1A** and **1B.** The user may cover or uncover the write-protect indicator hole **10c** using the write enable/disable selecting mechanism **10a.**

If the disk cartridge **1** is loaded into the optical disk drive with the first principal surface **2a** and the non-recordable side **400A** facing upward and with the second principal surface **2b** and the data recordable side 400B facing the optical pickup as shown in FIG. **5,** the optical disk drive senses whether the write-protect indicator hole **10c** on the second principal surface **2b** is opened or closed. And based on the sensing result, the optical disk drive may permit or prohibit writing on the data recordable side **400B.** More particularly, if the user has opened the write-protect indicator hole **10c** using the write enable/disable selecting mechanism **10a,** writing is prohibited. On the other hand, if he or she has closed the write-protect indicator hole **10c** using the write enable/disable selecting mechanism **10a,** writing is permitted.

As already described with reference to FIGS. **1A** and **1B,** the cartridge body **2** is shaped such that both of the first and second principal surfaces **2a** and **2b** can be opposed to the pickup of the optical disk drive when the disk cartridge is loaded into the optical disk drive. That is why the disk cartridge **1** may be loaded into the optical disk drive with the second principal surface 2b and the data-recordable side **400B** facing upward and with the first principal surface **2a** and the non-recordable side **400A** facing the optical pickup contrary to the disk cartridge **1** shown in FIG. **5.** In that case, the optical disk drive senses the write-protect indicator hole **10c** on the second principal surface **2b** opened, thus prohibiting writing on the non-recordable side **400A.** The status of the write-protect indicator hole **10c** is not sensed at least until the disk cartridge **1** has been loaded into the optical disk drive completely. Thus, after having been loaded with the disk cartridge **1,** the optical disk drive may alert the user to the fact that writing is prohibited. That is to say, the user can be alerted before the optical pickup actually accesses the non-recordable side **400A**. As a result, he or she can notice that the disk cartridge **1** has been loaded upside down just after the disk cartridge **1** has been inserted.

Suppose the user removes the optical disk **400** once by cutting off the lock pin **4b** (see FIGS. **1A** and 3) and opening the lid **4** and then stores the optical disk **400** back into the disk cartridge **1** again as shown in FIG. **5.** In that case, the non-recordable side **400A** of the optical disk **400** faces the first principal surface **2a** with the write-protect indicator hole **10b,** while the data recordable side **400B** thereof faces the second principal surface **2b** with the write-protect indicator hole **10c.** That is to say, the status of the disk cartridge **1** remains the same as that described above except that the lock pin **4b** has been cut off and the removal history hole **9** (see FIGS. **1A** and **1B)** is opened. Thus, the optical disk drive **1** senses the removal history hole **9** opened and then does a defect test, if necessary, before starting to operate as described above.

Suppose the user removes the optical disk **1** once by cutting off the lock pin **4b** and opening the lid **4** and then inserts the optical disk **400** upside down into the disk cartridge **1** again. In that case, the non-recordable side **400A** of the optical disk **400** faces the first principal surface **2a** with the write-protect indicator hole **10c,** while the data recordable side **400B** thereof faces the second principal surface **2b** with the write-protect indicator hole **10c** as shown in FIG. **6.**

If the disk cartridge **1** including the optical disk **400** has been loaded into the optical disk drive with the second surface **2b** facing upward and with the first surface **2a** facing the optical pickup as shown in FIG. **6,** the optical disk drive senses the write-protect indicator hole **10b** on the first principal surface **2a** opened, thus prohibiting writing on the non-recordable side **400A**. As the data-recordable side **400B** faces the first surface **2a,** the optical disk drive can read data from the data-recordable side **400B** on receiving a read instruction from the user.

These two directions the disk cartridge **1** and the optical disk **400** face in this case are an inappropriate combination. However, it is not unthinkable that the user inserts the optical disk **400** in such a combination of directions by mistake. Also, since the first principal surface **2a** of the disk cartridge **1** in which a single-sided rewritable optical disk is stored is not used normally, the user may insert the optical disk 400 in such a combination of directions intentionally to prohibit writing on the disk.

In any case, when the disk cartridge is used inappropriately that way, it is most important to prevent the data that has already been stored in the data-recordable side **400B** from being altered by mistake. In the disk cartridge **1** of this preferred embodiment, the write-protect indicator hole **10b** on the first principal surface **2a** is not provided with the write enable/disable selecting mechanism **10a,** and therefore, the user cannot cover the write-protect indicator hole **10b.** That is why even when the disk cartridge is used in such a wrong way, writing on the data-recordable side **400B** is still prohibited. As a result, the data that has been written by the user is never erased by mistake.

Also, suppose the disk cartridge **1** in which the optical disk **400** is stored as shown in FIG. **6** is loaded into the optical disk drive with the second principal surface 2b facing the optical pickup. In that case, the optical disk drive senses whether the write-protect indicator hole **10c** is opened or closed before starting a write operation. However, as the non-recordable side **400A** faces the optical pickup, actually no data can be written on that side.

The disk cartridge **1** of the present invention may be made of a polycarbonate resin, an ABS resin, a polystyrene resin or any other suitable material by an injection molding process. As described above, the disk cartridge **1** is shaped so as to be loadable into the optical disk drive with any of the two sides faced upward. That is to say, the disk cartridge **1** of the present invention has almost the same shape as the double-sided rewritable disk cartridge shown in FIGS. **11A** and **11B** except the structure near the write-protect indicator holes **10b** and **10c.** For that reason, if a set of dies with a nesting structure for forming the structure near the write-protect indicator holes **10b** and **10c** is used, the disk cartridge **1** of the present invention of the single-sided rewritable type can be made with the same dies as the double-sided rewritable type of disk cartridge shown in FIGS. **11A** and **11B.** Consequently, the disk cartridges **1** of the single-sided rewritable type and the disk cartridges **31** of the double-sided rewritable type can be manufactured without changing the whole sets of dies and the manufacturing process can be finished in a shorter time. On top of that, since there is no need to prepare dedicated sets of dies for the disk cartridges **1** of the single-sided rewritable type and the disk cartridges **31** of the double-sided rewritable type, the die set cost can be reduced and the overall manufacturing costs of the disk cartridges of the single-sided rewritable type can be cut down, too.

In the disk cartridge of the preferred embodiment described above, of the two write-protect indicator holes that are cut through the two principal surfaces of the cartridge body, only the hole on one principal surface is provided with a write enable/disable selecting mechanism. That is why if a single-side rewritable optical disk with a non-recordable side is stored in a disk cartridge such that the non-recordable side faces the principal surface with a write-protect indicator hole without the write enable/disable selecting mechanism, the optical disk drive can sense the write-protect indicator hole opened and also sense that this is a non-recordable side before the optical pickup actually accesses that non-recordable side.

Besides, as one of the two write-protect indicator holes has no write enable/disable selecting mechanism, writing on the data-recordable side of an optical disk is prohibited even if the user has removed the optical disk from the disk cartridge once and then inserted the disk into the disk cartridge again upside down. As a result, the data that has been written on the data-recordable side is never altered by mistake.

What is more, in the disk cartridge of the preferred embodiment described above, the cartridge body is shaped so as to be loadable into the optical disk drive with any of the two sides faced upward. For that reason, the disk cartridges of the preferred embodiment described above can be manufactured using the same die set as disk cartridges to store a double-sided rewritable disk. Consequently, the overall manufacturing costs of disk cartridges can be cut down.

The disk cartridge is supposed to store a rewritable data storage medium in the preferred embodiments described above but may also store a write-once data storage medium. In the latter case, even if the disk has been inserted into the disk cartridge upside down, it is also possible to prevent the optical disk drive from adding unwanted data for the user or erasing data by mistake.

### INDUSTRIAL APPLICABILITY

The disk cartridge of the present invention can be used effectively to store a data storage medium with a single data storage layer and is preferably used for a single-sided rewritable optical disk, from/on which data is read and written optically, among other things.

## Claims

1. A disk cartridge comprising
a cartridge body including: first and second principal surfaces that are opposed to each other; a storage space that is provided between the first and second principal surfaces to store a disklike data storage medium therein; windows that are cut through the first and second principal surfaces to partially expose the data storage medium being stored in the storage space; an opening that is located between the first and second principal surfaces such that the data storage medium stored in the storage space is removable from the storage space; and write-protect indicator holes that are cut through the first and second principal surfaces to prohibit writing on the data storage medium stored in the storage space,
a shutter that is supported movably with respect to the cartridge body so as to open and close the windows of the first and second principal surfaces, and
a lid to cover and uncover the opening of the cartridge body,
wherein the cartridge body is shaped such that both of the first and second principal surfaces are able to be opposed to a pickup of the optical disk drive when the disk cartridge is loaded into the optical disk drive, and
wherein of the two write-protect indicator holes that are cut through the first and second principal surfaces, only the hole of the second principal surface is provided with a write enable/disable selecting mechanism that covers or uncovers the write-protect indicator hole.

2. The disk cartridge of claim 1, wherein the cartridge body further includes:
first and second side surfaces, which are adjacent to the opening and opposed to each other;
a third side surface, which is adjacent to the first and second side surfaces and opposed to the opening;
gripper slot portions, which are cut on the first and second side surfaces near the opening; and
auto-loading detents, which are cut on the first and second side surfaces near the third side surface.

3. The disk cartridge of claim 2, wherein the gripper slot portions and the auto-loading detents are both recessed and reach the first and second principal surfaces so as to define notches on the first and second side surfaces.

4. The disk cartridge of claim 1, wherein the lid is supported near one end thereof so as to be rotatable with respect to the cartridge body.

5. The disk cartridge of claim 1, wherein either the lid or the cartridge body has a tab portion that is attached thereto in a removable position, and
wherein either the cartridge body or the lid has an engaging portion to engage with the tab portion.

6. The disk cartridge of claim 1, wherein if the cartridge body is arranged vertically such that the third side surface is located over the opening, the second side surface is located on the right-hand side of the first principal surface, and
wherein the cartridge body has, on the first principal surface, a circular location hole, which has a diameter of 4.00 mm to 4.05 mm and of which the center is set at a distance of 22.8 mm to 23.2 mm from the outside surface of the lid and at a distance of 11.0 mm to 11.4 mm from the second side surface, and
wherein the write-protect indicator hole has a circular shape, which has a diameter of 3.1 mm to 3.2 mm and of which the center is set at a distance of 18.45 mm to 18.55 mm from the center of the location hole toward the lid and at a distance of 8.95 mm to 9.05 mm from the center of the location hole toward the first side surface.

7. The disk cartridge of one of claims 1 to 5, further comprising a data storage medium,
wherein the data storage medium includes a recordable data storage layer on only one side thereof and is stored in the storage space of the cartridge body such that the data storage layer faces the second principal surface.

8. The disk cartridge of claim 7, wherein the data storage layer includes a data area, on which user data is written, and a lead-in area, which is located inside of the data area to store information representing where the data belongs.
